# FASCICULE DE BREVET EUROPEEN

(11) **EP 1 646 894 B1**
(45) Date de publication et mention de la délivrance du brevet: **28.11.2007**
(21) Numéro de dépôt: 04763453.0
(22) Date de dépôt: 22.07.2004
(51) Int. Cl.: G02B 5/30, G02B 27/28

(54) **DISPOSITIF D'ECLAIRAGE A RECYCLAGE DE POLARISATION DANS UN DOUBLE PRISME**
BELEUCHTUNGSEINRICHTUNG MIT POLARISATIONS-RECYCLING IN EINEM DOPPELPRISMA
ILLUMINATING DEVICE WITH POLARIZATION RECYCLING IN A DOUBLE PRISM

(30) Priorité: 23.07.2003 FR 0308961
(43) Date de publication de la demande: 19.04.2006
(73) Titulaire: Thomson Licensing, 92100 Boulogne-Billancourt (FR)
(72) Inventeur: SACRE, Jean-Jacques, F-35410 Chateaugiron (FR); BENOIT, Pascal, F-35340 Liffre (FR)
(74) Mandataire: Browaeys, Jean-Philippe
(86) Numéro de dépôt international: PCT/EP2004/008282
(87) Numéro de publication internationale: WO 2005/008301

(56) Documents cités:
- US-A- 3 436 143
- US-A- 5 267 029
- US-A- 5 716 122
- HANSEN D. ET AL.: "The Dispay Applications and physics of the ProFlux Wire Grid Polarizer" SID 02 DIGEST, vol. XXXIV, 20 mai 2003 (2003-05-20), pages 730-733, XP009029129
- PATENT ABSTRACTS OF JAPAN vol. 017, no. 054 (P-1480), 3 février 1993 (1993-02-03) & JP 04 267203 A (SEIKO EPSON CORP), 22 septembre 1992 (1992-09-22)

## Description

L'invention concerne un système d'éclairage d'un objet et notamment un système nécessitant un éclairage à l'aide d'une lumière polarisée. L'invention est notamment applicable dans les appareils de projection et de rétroprojection à cristaux liquides.

Les cellules à cristaux liquides qui permettent de moduler la lumière pour afficher des images nécessitent, pour fonctionner, d'être illuminées à l'aide d'une lumière polarisée. En utilisant une source de lumière non polarisée, on doit prévoir des moyens pour utiliser les deux polarisations de la lumière si on ne veut pas perdre 50 % de l'énergie lumineuse émise par la source d'éclairement et cela sans compter les pertes par absorption dans les polariseurs.

On connaît notamment un système décrit dans le brevet US 5 784 181 qui prévoit deux prismes dont des sections droites sont des triangles rectangles et qui enserrent un séparateur holographique de polarisations entre des faces contenant chacune un côté de l'angle droit des triangles rectangles. Les autres faces des prismes contenant l'autre côté de l'angle droit du triangle rectangle sont situées selon un même plan et servent de faces de sortie. Une source de lumière non polarisée émet un faisceau qui éclaire une face hypoténuse d'un prisme selon une direction parallèle à la section droite du prisme. La lumière atteint le séparateur holographique qui transmet une lumière présentant une première polarisation à la face de sortie d'un prisme qui est dotée d'un dispositif pour transformer cette première polarisation en deuxième polarisation, tandis qu'il réfléchit la lumière présentant une deuxième polarisation à la face de sortie de l'autre prisme qui, elle, n'est pas dotée de dispositif de transformation de polarisation. Aux faces de sortie sont associés des dispositifs holographiques permettant de changer les directions des faisceaux, qui ont même polarisation en aval des faces de sortie, de façon à rendre ces faisceaux parallèles pour qu'ils éclairent une cellule à cristal liquide selon une même direction.

Cependant, dans un tel système, les dispositifs holographiques doivent être éclairés ou « lus » sous un angle d'incidence de Brewster d'environ 45°. Ils fonctionnent donc difficilement sous une incidence d'environ 30°. Ce système présente donc l'inconvénient, en raison de l'utilisation de dispositifs holographiques, de nécessiter un faisceau d'éclairage présentant une faible divergence. Par ailleurs, ce système n'est efficace que dans une bande spectrale limitée. Typiquement chaque dispositif holographique est efficace seulement dans une bande spectrale primaire (rouge, verte, ou bleue) de la lumière visible.

Le document US5716122 décrit un système de recyclage de polarisation également à deux prismes séparés par un séparateur de polarisation de type multi-couches minces (voir colonnes 4 et 5 - colonne 17, lignes 42-49) ; selon ce document, le faisceau incident n'est pas forcément composé uniquement de rayons parallèles, mais peut inclure des composantes non parallèles (colonne 19, lignes 15-17) ; cependant, les angles d'incidence sur le séparateur de polarisation qui sont cités dans ce document sont compris entre 45° et 38°, ce qui représente une limitation gênante quand le faisceau incident présente une ouverture élevée, notamment supérieure ou égale à 5° de part et d'autre de la direction générale de ce faisceau.

D'autres documents, comme US 4575191, US 4161349, US 3987299, décrivent des systèmes dits de Koesters qui prévoient également deux prismes dont des sections droites sont des triangles rectangles et qui enserrent ici un séparateur de couleurs entre des faces contenant chacune un côté de l'angle droit des triangles rectangles.

L'invention a donc pour objet de résoudre les inconvénients précités.

L'invention concerne donc un dispositif d'éclairage comprenant une source optique émettant un faisceau lumineux non polarisé. Un séparateur de polarisations est compris entre des premières faces d'un premier et d'un deuxième prisme transparent. Ces prismes possèdent chacun une deuxième face de sortie situées toutes deux selon un même plan. Les premières faces et les deuxièmes faces de chaque prisme sont perpendiculaires. Le faisceau lumineux pénètre dans le premier prisme par une troisième face de ce prisme et atteint le séparateur de polarisations qui transmet la lumière présentant une première direction de polarisation et qui réfléchit la lumière présentant une deuxième direction de polarisation. En outre, le séparateur de polarisations comporte un polariseur à grille situé entre les premières faces du premier et du deuxième prisme. De plus, la lumière transmise par le séparateur de polarisations est transmise à une troisième face du deuxième prisme qui la réfléchit vers ladite deuxième face de sortie du deuxième prisme tandis que la lumière réfléchie par le séparateur de polarisations est transmise à ladite troisième face du premier prisme qui la réfléchit vers ladite deuxième face de sortie du premier prisme. Grâce à l'utilisation d'un polariseur à grille, on peut séparer efficacement la polarisation dans une large gamme d'angles d'incidence ; ceci permet également d'éclairer la troisième face du premier prisme par un faisceau provenant de la source présentant une grande ouverture, notamment supérieure ou égale à 5° de part et d'autre de la direction moyenne du faisceau ; de préférence, cette ouverture reste néanmoins inférieure ou égale à 10° de part et d'autre de la direction moyenne du faisceau.

Avantageusement, le système comporte un dispositif rotateur de polarisation associé à une desdites deuxièmes faces de sortie des prismes. Ce dispositif permet alors d'obtenir la même direction de polarisation en aval de deux faces de sortie.

Avantageusement, ledit polariseur à grille est réalisé sur la première face du premier prisme ou sur la première face du deuxième prisme.

Un espace d'air est avantageusement prévu entre, d'une part le polariseur à grille et ladite première face du premier ou du deuxième prisme sur laquelle il est réalisé et, d'autre part l'autre première face du deuxième ou du premier prisme respectivement (2 ou 1) située en vis-à-vis. Cet espace d'air peut être utilisé pour le refroidissement du système.

Selon une forme de réalisation du système de l'invention, les angles non droits des prismes sont sensiblement de 60° à l'opposé des premières faces et de 30° à l'opposé des deuxièmes faces, et la direction moyenne du faisceau lumineux F1 est sensiblement perpendiculaire à la troisième face du premier prisme lorsqu'il pénètre dans ce prisme. Un telle configuration géométrique permet d'assurer que la direction moyenne du faisceau qui traverse la deuxième face de sortie du premier prisme et la direction moyenne du faisceau qui traverse la deuxième face de sortie du deuxième prisme soient sensiblement parallèles entre elles et perpendiculaires à ces deuxièmes faces. Cette configuration est donc adaptée pour que les axes optiques des faisceaux émergeant des faces de sortie soient parallèles. A noter également que, en aval du séparateur, grâce à cette configuration géométrique, les chemins optiques des deux faisceaux séparés sont alors approximativement identiques, ce qui est très avantageux pour l'emploi de ce dispositif pour éclairer un imageur dans un système de projection.

De préférence, l'indice du matériau des prismes est inférieur ou égal à 1,5, ce qui permet d'obtenir des angles d'incidence inférieurs à 60° sur le polariseur à grille, même pour une ouverture élevée du faisceau.

Suivant l'invention, le système comporte un dispositif intégrateur de lumière possédant une face d'entrée qui est couplée optiquement auxdites deuxièmes faces de sortie des prismes et qui, recevant les faisceaux réfléchis par les troisièmes faces des prismes, fournit un faisceau par une face de sortie dont l'éclairement est sensiblement homogène sur cette face. On utilise avantageusement à cette fin un intégrateur de type « barreau » (« rod integrator » en langue anglaise).

Avantageusement, le faisceau lumineux émis par la source est un faisceau non collimaté de telle façon que les enveloppes des faisceaux reçus par le dispositif intégrateur de lumière soient telles que la totalité des faisceaux pénètre dans le dispositif intégrateur.

Les différents aspects et caractéristiques de l'invention apparaîtront plus clairement dans la description qui va suivre et dans les figures annexées qui représentent :
- la figure 1, un exemple général de réalisation d'un système d'éclairage,
- les figure 2a et 2b, un exemple de réalisation plus détaillé d'un système d'éclairage,
- la figure 3, un exemple d'application de l'invention à un système de projection selon l'invention.

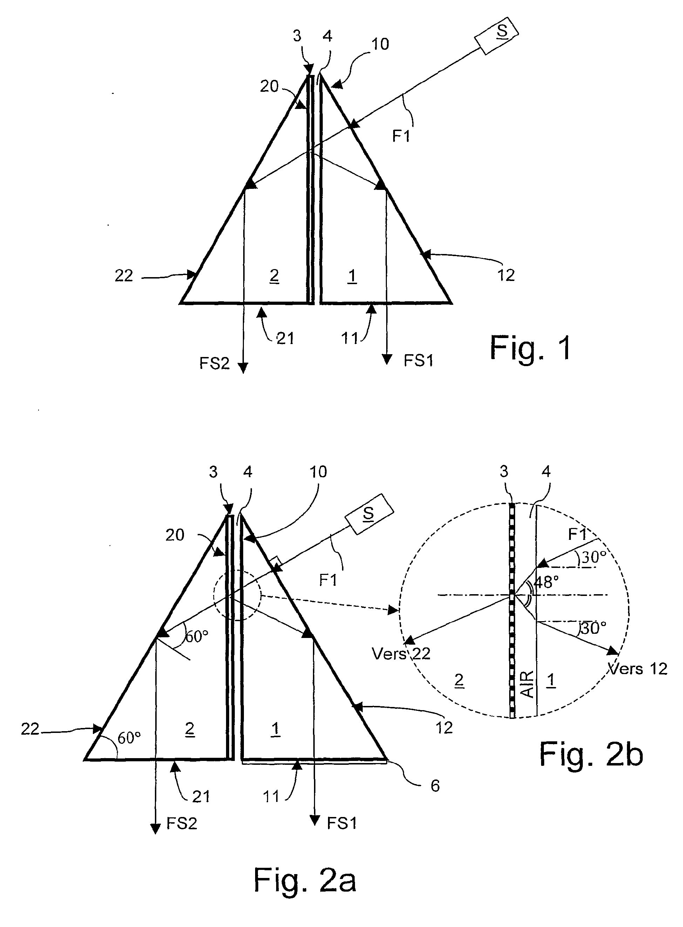

En se reportant à la figure 1, on va donc décrire un exemple de réalisation d'un système d'éclairage adapté à l'invention.

Ce système comporte une source lumineuse S émettant un faisceau lumineux non polarisé F1 vers deux prismes 1 et 2. Ces deux prismes ont des sections droites selon le plan d'incidence du faisceau F1 ayant la forme de triangles rectangles. Deux côtés 10 et 20 des dièdres droits des prismes enserrent un dispositif séparateur de polarisations 3. Les deux autres faces 11 et 21 des dièdres droits des prismes sont situées selon un même plan. Ces faces 11 et 21 serviront de faces de sortie des prismes.

La face 12 du prisme 1 contenant l'hypoténuse de la section droite du prisme 1 servira de face d'entrée au système.

Le faisceau F1 a un angle d'incidence sur la face 12 lui permettant d'entrer dans le prisme 1. Avantageusement, le faisceau F1 est sensiblement perpendiculaire à la face 12.

Selon l'invention, le séparateur de polarisations est un séparateur de polarisations à grille ; pour permettre notamment son refroidissement, on prévoit ici une lame d'air 4 entre le séparateur et le prisme 1. Pour un angle d'incidence approprié d'un rayon incident, la lumière polarisée selon une direction ne sera pas (ou quasiment pas) influencée par le séparateur de polarisation, tandis que la lumière polarisée selon une direction perpendiculaire sera réfléchie par le séparateur de polarisation.

Le faisceau F1 atteint donc le séparateur de polarisation 3 qui transmet vers la face 22 du prisme 2, qui contient l'hypoténuse de la section droite de ce prisme, la lumière polarisée selon une direction et qui réfléchit, vers la face 12 du prisme 1, la lumière polarisée selon une direction perpendiculaire à la première direction. Plus précisément, il transmet la lumière dont la direction de polarisation est perpendiculaire à la direction des éléments de la grille de polarisation 3, et il réfléchit la lumière dont la direction de polarisation est parallèle à ces éléments.

On trouvera une description d'un séparateur de polarisations à grille dans le document US 6 122 103. Préférentiellement l'orientation du polariseur est telle que les éléments de la grille sont perpendiculaires au plan de la figure 1. Dans ce cas, la polarisation S sera réfléchie. Cette réflexion se fera vers la face 10 et la lumière reçue sur la face 10 doit normalement être transmise vers la face 12 du prisme 1. C'est pourquoi, dans l'exemple de réalisation de la figure 1, pour éviter que la lumière ou une partie de la lumière soit l'objet de réflexions entre le polariseur 3 et la face 10 du prisme 1, cette face 10 recevra avantageusement un traitement anti-reflet.

Dans l'exemple de réalisation de la figure 1, le séparateur de polarisation est réalisé sur la face 20 du prisme 2. Mais il est bien évident que si il était réalisé sur la face 10 du prisme 1, c'est alors la face 20 du prisme 2 qui recevrait avantageusement un traitement anti-reflet.

La face 22 du prisme 2 réfléchit la lumière transmise vers la face 21. Cette réflexion se fait soit par réflexion totale interne, soit par réflexion totale sur la face 22 traitée réfléchissante (métallisée par exemple).

La face 12 réfléchit par réflexion totale interne la lumière réfléchie par le séparateur de polarisations vers la face 11.

Avantageusement, les angles des prismes et l'angle d'incidence du faisceau F1 sur la face 12 sont choisis pour que les directions des deux faisceaux de sortie FS1 et FS2 soient parallèles.

La figure 2a représente un exemple de réalisation plus détaillé du système de la figure 1.

Pour que les directions des faisceaux FS1 et FS2 soient parallèles, les prismes 1 et 2 ont leurs faces 11 et 12 d'une part et 21 et 22 d'autre part qui forment des angles de 60°. De plus, la direction du faisceau F1 est, de préférence, sensiblement normale au plan de la face d'entrée 12. La direction du faisceau F1 fait donc, de préférence, un angle d'incidence de 30° par rapport au plan de la face 10 (voir figure 2b).

Ainsi, comme indiqué précédemment, si une lame d'air est prévue entre le polariseur et la face 10 du prisme 1, et si les prismes sont en verre , par exemple en BK7, d'indice 1,5 environ, l'angle d'incidence de la direction du faisceau F1 sur le séparateur de polarisation 3 est alors d'environ 48°. Cela implique donc, comme cela est représenté en figure 2b, qu'un rayon lumineux du faisceau F1 faisant un angle d'incidence de 30° avec la face 10, fera un angle d'incidence d'environ 48° sur le plan du séparateur de polarisations 3.

L'avantage à utiliser un séparateur de polarisations à grille est qu'il présente une très bonne efficacité de séparation dans une fourchette très large d'angles d'incidence, ce qui permet ici de l'éclairer par un faisceau F1 non collimaté, notamment présentant une grande ouverture, supérieure ou égale à 5° de part et d'autre de sa direction moyenne. Un rendement optimal de ce séparateur est obtenu pour des angles d'incidence des rayons du faisceau F1 compris entre 0 et 60°. Avec un angle d'incidence de 48°, nous sommes donc dans la gamme de fonctionnement optimale.

De plus, si le faisceau lumineux émis par la source n'est pas collimaté, l'utilisation d'un séparateur de polarisations à grille permettra également de séparer la lumière d'un faisceau dont l'ouverture angulaire est répartie de part et d'autre d'une direction moyenne présentant cet angle d'incidence de environ 48° avec le plan du séparateur de polarisations à grille, et cela tout en ayant un bon rendement de séparation. Pratiquement, on pourra admettre, par exemple, que l'ouverture du faisceau pourra être de 9 à 10° de part et d'autre de la direction moyenne du faisceau. On se trouvera donc dans une configuration dans laquelle le séparateur à grille fonctionne avec des angles d'incidence de la lumière incidente comprise par exemple entre 48°+10° et 48°-10°. Cette configuration permettra donc de faire fonctionner le séparateur de polarisations avec un rendement optimal

Pour obtenir un système d'éclairage fournissant un faisceau d'éclairement polarisé selon une seule direction, on prévoit un rotateur de polarisation 6 associé à l'une seulement des faces de sortie des prismes, la face 11 par exemple. Ce rotateur de polarisation fait donc tourner de 90° la direction de polarisation du faisceau réfléchi par la face 12 du prisme 1.

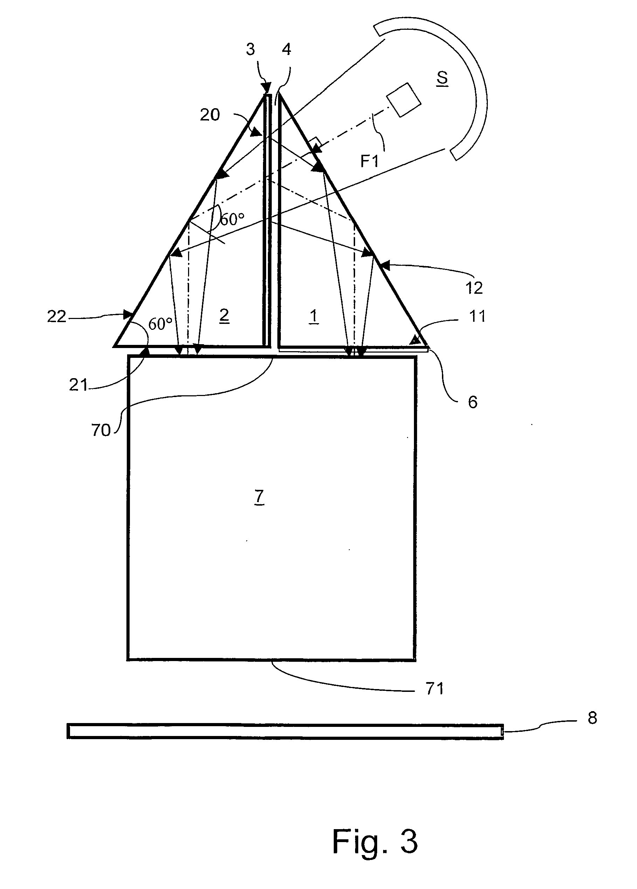

La figure 3 représente un système dans lequel on a prévu un dispositif intégrateur de lumière 7 selon l'invention. Ce dispositif est couplé aux faces de sortie 11 et 21 des prismes 1 et 2 de façon à permettre le couplage de toute la lumière réfléchie par les faces 12 et 22.

De préférence, comme représenté en figure 3, le faisceau de lumière émis par la source S est focalisée à proximité de la face d'entrée 70 du dispositif intégrateur 7. Le dispositif intégrateur fournit par sa face de sortie 71 un faisceau relativement homogène qui permet d'éclairer uniformément un objet 8. Dans le cadre d'un appareil de projection, cet objet est un modulateur spatial de lumière qui module la lumière reçue et permet de projeter sur un écran une image affichée sur le modulateur spatial de lumière.

Le séparateur de polarisation à grille est réalisé sur la face 20 du prisme 2 sous la forme d'un réseau de bandes en matériau réfléchissant à la lumière émise par la source S. Ce matériau peut être un métal tel que de l'aluminium. Le pas des bandes est par exemple de l'ordre de quelques dizaines de nanomètres et la largeur de chaque bande est de quelques de nanomètres.

Un tel système d'éclairement présente les avantages de fonctionner avec un faisceau non collimaté émis par la source et de fournir un éclairement homogène à la sortie du dispositif intégrateur. De plus, un tel système fonctionne dans une large gamme de longueurs d'ondes et notamment dans la gamme du visible.

## Revendications

1. Dispositif d'éclairage comprenant une source optique (S) émettant un faisceau lumineux (F1) non polarisé, un séparateur de polarisations (3) compris entre des premières faces (10 et 20) d'un premier et d'un deuxième prisme transparent (1, 2), lesquels prismes possèdent chacun une deuxième face de sortie (11, 21) situées toutes deux selon un même plan, les dites premières faces et deuxièmes faces de chaque prisme étant perpendiculaires ; le faisceau lumineux pénétrant dans le premier prisme par une troisième face (12) de ce premier prisme et atteignant le séparateur de polarisations (3) qui transmet la lumière présentant une première direction de polarisation et qui réfléchit la lumière présentant une deuxième direction de polarisation ; la lumière transmise par le séparateur de polarisations (3) étant transmise à une troisième face (22) du deuxième prisme qui la réfléchit vers ladite deuxième face de sortie (21) du deuxième prisme, et la lumière réfléchie par le séparateur de polarisations étant transmise à ladite troisième face(12) du premier prisme qui la réfléchit vers ladite deuxième face de sortie (11) du premier prisme, **caractérisé en ce que** ledit dispositif d'éclairage comprend également un dispositif intégrateur de lumière (7) possédant une face d'entrée (70) qui est couplée optiquement auxdites deuxièmes faces de sortie (11, 21) des prismes et qui, recevant les faisceaux réfléchis par les troisièmes faces des prismes, fournit un faisceau par une face de sortie (71) dont l'éclairement est sensiblement homogène sur cette face et **en ce que** le séparateur de polarisations (3) comporte un polariseur à grille (3) situé entre les premières faces (10, 20) du premier et du deuxième prisme (1, 2).

2. Dispositif d'éclairage selon la revendication 1, **caractérisé en ce que** les angles non droits des prismes sont sensiblement de 60° à l'opposé des premières faces et de 30° à l'opposé des deuxième face, et **en ce que** la direction moyenne dudit faisceau lumineux (F1) est sensiblement perpendiculaire à la troisième face du premier prisme lorsqu'il pénètre dans ce prisme.

3. Dispositif selon la revendication 1 ou 2 **caractérisé en ce que** l'ouverture dudit faisceau lumineux (F1) est supérieure ou égale à 5° de part et d'autre de la direction moyenne dudit faisceau.

4. Dispositif selon la revendication 3 **caractérisé en ce que** l'ouverture dudit faisceau lumineux (F1) est inférieure ou égale à 10° de part et d'autre de la direction moyenne dudit faisceau.

5. Dispositif d'éclairage selon l'une quelconque des revendications précédentes, **caractérisé en ce qu'**il comporte un dispositif rotateur de polarisation associé à une seulement desdites deuxièmes faces de sortie (21 ou 11) des prismes.

6. Dispositif d'éclairage selon l'une quelconque des revendications précédentes, **caractérisé en ce que** ledit polariseur à grille est réalisé sur la première face (10) du premier prisme (1) ou sur la première face (20) du deuxième prisme (2).

7. Dispositif d'éclairage selon la revendication 6, **caractérisé en ce qu'**un espace d'air (4) est prévu entre d'une part le polariseur à grille (3) et ladite première face du premier ou du deuxième prisme (1 ou 2) sur laquelle il est réalisé et, d'autre part l'autre première face (10) du deuxième ou du premier prisme respectivement (2 ou 1) située en vis-à-vis.

8. Dispositif d'éclairage selon l'une quelconque des revendications précédentes, **caractérisé en ce que** l'indice du matériau des prismes est inférieur ou égal à 1,5.

## Claims

1. An illuminating device comprising an optical source (S) emitting an unpolarized light beam (F1), a polarizing beam splitter (3) included between first faces (10 and 20) of a first and of a second transparent prism (1, 2), which prisms each have a second exit face (11, 21) both situated within one and the same plane, said first faces and second faces of each prism being perpendicular; the light beam penetrating into the first prism through a third face (12) of this first prism and reaching the polarizing beam splitter (3) that transmits the light with a first polarization direction and that reflects the light with a second polarization direction; the light transmitted by the polarizing beam splitter (3) being transmitted to a third face (22) of the second prism that reflects it toward said second exit face (21) of the second prism, and the light reflected by the polarizing beam splitter being transmitted to said third face (12) of the first prism that reflects it toward said second exit face (11) of the first prism, **characterized in that** it comprises a light integrating device (7) having an entry face (70) that is optically coupled to said second exit faces (11, 21) of the prisms and that, receiving the beams reflected by the third faces of the prisms, delivers a beam through an exit face (71) whose illumination is substantially homogeneous over this face and **in that** the polarizing beam splitter (3) comprises a grid polarizer (3) situated between the first faces (10, 20) of the first and of the second prism (1, 2).

2. The illuminating device as claimed in claim 1, **characterized in that** the non-right angles of the prisms are substantially equal to 60° opposite the first faces and to 30° opposite the second face, and **in that** the average direction of said light beam (F1) is substantially perpendicular to the third face of the first prism as it penetrates into this prism.

3. The device as claimed in claim 1 or 2, **characterized in that** the divergence of said light beam (F1) is greater than or equal to 5° on either side of the average direction of said beam.

4. The device as claimed in claim 3, **characterized in that** the divergence of said light beam (F1) is less than or equal to 10° on either side of the average direction of said beam.

5. The illuminating device as claimed in any one of the preceding claims, **characterized in that** it comprises a polarization rotator device associated with only one of said second exit faces (21 or 11) of the prisms.

6. The illuminating device as claimed in any one of the preceding claims, **characterized in that** said grid polarizer is formed on the first face (10) of the first prism (1) or on the first face (20) of the second prism (2).

7. The illuminating device as claimed in claim 6, **characterized in that** an air gap (4) is provided between, on the one hand, the grid polarizer (3) and said first face of the first or of the second prism (1 or 2) on which it is formed and, on the other, the other first face (10) of the second or of the first prism (2 or 1), respectively, situated facing it.

8. The illuminating device as claimed in anyone of the preceding claims, **characterized in that** the index of the material of the prisms is less than or equal to 1.5.

## Patentansprüche

1. Beleuchtungsvorrichtung mit einer optischen Quelle (S), die einen nicht polarisierten Lichtstrahl (F1) aussendet, einem Polarisationsteiler (3), der zwischen ersten Flächen (10 und 20) eines ersten und eines zweiten durchsichtigen Prismas (1, 2) angeordnet ist, welche Prismen jeweils eine zweite Austrittsfläche (11, 21) aufweisen, welche Flächen beide gemäß einer gleichen Ebene angeordnet sind, wobei die erste und zweite Fläche des jeweiligen Prismas senkrecht sind, wobei der Lichtstrahl in das erste Prisma über eine dritte Fläche (12) dieses ersten Prismas eindringt und den Polarisationsteiler (3) erreicht, der das eine erste Polarisationsrichtung aufweisende Licht überträgt und das eine zweite Polarisationsrichtung aufweisende Licht reflektiert, wobei das von dem Polarisationsteiler (3) übertragene Licht zu einer dritten Fläche (22) des zweiten Prismas übertragen wird, die es zu der zweiten Austrittsfläche (21) des zweiten Prismas reflektiert, und wobei das von dem Polarisationsteiler reflektierte Licht zu der dritten Fläche (12) des ersten Prismas übertragen wird, die es zu der zweiten Austrittsfläche (11) des ersten Prismas reflektiert, **dadurch gekennzeichnet, dass** die Beleuchtungsvorrichtung ebenfalls eine Lichtintegrationsvorrichtung (7) mit einer Eintrittsfläche (70) aufweist, die optisch mit den zweiten Austrittsflächen (11, 21) der Prismen gekoppelt ist und die, die von den dritten Prismenflächen reflektierten Strahlen empfangend, über eine Austrittsfläche (71) einen Strahl bereitstellt, dessen Beleuchtung auf dieser Fläche weitestgehend homogen ist, und dass der Polarisationsteiler (3) einen Gitterpolarisator (3) aufweist, der zwischen den ersten Flächen (10, 20) des ersten und des zweiten Prismas (1, 2) angeordnet ist.

2. Beleuchtungsvorrichtung nach Anspruch 1, **dadurch gekennzeichnet, dass** die nicht rechten Winkel der Prismen gegenüber den ersten Flächen im Wesentlichen 60° betragen und gegenüber den zweiten Flächen im Wesentlichen 30° betragen, und dass die mittlere Richtung des Lichtstrahls (F1) weitestgehend senkrecht zu der dritten Fläche des ersten Prismas ist, wenn er in dieses Prisma eindringt.

3. Vorrichtung nach Anspruch 1 oder 2, **dadurch gekennzeichnet, dass** die Apertur des Lichtstrahls (F1) größer als oder gleich 5° beidseitig der mittleren Richtung des Strahls beträgt.

4. Vorrichtung nach Anspruch 3, **dadurch gekennzeichnet, dass** die Apertur des Lichtstrahls (F1) kleiner als oder gleich 10° beidseitig der mittleren Richtung des Strahls beträgt.

5. Beleuchtungsvorrichtung nach einem der vorhergehenden Ansprüche, **dadurch gekennzeichnet, dass** sie eine Polarisationsdrehvorrichtung aufweist, die zu lediglich einer der zweiten Austrittsflächen (21 oder 11) der Prismen zugeordnet ist.

6. Beleuchtungsvorrichtung nach einem der vorhergehenden Ansprüche, **dadurch gekennzeichnet, dass** der Gitterpolarisator auf der ersten Fläche (10) des ersten Prismas (1) oder auf der ersten Fläche (20) des zweiten Prismas (2) ausgebildet ist.

7. Beleuchtungsvorrichtung nach Anspruch 6, **dadurch gekennzeichnet, dass** ein Luftraum (4) zwischen dem Gitterpolarisator (3) und der ersten Fläche des ersten oder des zweiten Prismas (1 oder 2), auf der er ausgebildet ist, einerseits und der anderen gegenüberliegenden ersten Fläche (10) des zweiten beziehungsweise des ersten Prismas (2 oder 1) andererseits vorgesehen ist.

8. Beleuchtungsvorrichtung nach einem der vorhergehenden Ansprüche, **dadurch gekennzeichnet, dass** der Prismenmaterialindex kleiner als oder gleich 1,5 ist.
